# EUROPEAN PATENT APPLICATION

(11) **EP 2 378 018 A2**
(43) Date of publication of application: **19.10.2011**
(21) Application number: 11153265.1
(22) Date of filing: 03.02.2011
(51) Int. Cl.: E04B 1/26, E04B 7/02, F16B 5/00, F16B 15/00

(54) **Hinged Connection Device**

(30) Priority: 14.04.2010 GB 1006156
(71) Applicant: Gang-Nail Systems Limited, Aldershot Hampshire GU12 4XG (GB)
(72) Inventor: Baron, Paul, Farnham, Surrey GU9 9ED (GB)
(74) Representative: Roberts, David Leslie

(57) **Abstract**

A device for connecting together two structural building components (6,8), provides a hinged connection between the components. The device comprises a first member (2) for attachment to one of the components (6), a second member (4) for attachment to the other component (8), connecting means (10) for connecting the two members together so that at least one of the components can pivot relative to the other component and locking means (60,62,44,48) for retaining said component at any selected one of a number of possible angles to the other component, wherein the device also includes indicating means for indicating the selected angle. The device may be one of a plurality of such devices in a frame for a pitched roof of a building, the frame comprising a plurality of pairs of rafters,, each pair being connected together by a respective one of the devices so as to define a common hinge axis along the region of the ridge or apex of the roof.

## Description

### Field of the invention

This invention relates to a device for connecting together two structural building components (for example rafters for a roof) to provide a hinged connection between them, and to a frame for a pitched roof for a building.

### Background to the invention

It is common for buildings, in particular domestic housing, to be constructed around wooden frames, the components of which may be prefabricated off site. This is particularly applicable to roofing trusses formed from timbers which are connected together by suitable means, such as nail plates, and then transported to a building site for incorporation into the rest of the building frame. US patents nos. US 5,553,961 1 and US Re. 31,234 disclose connectors in the form of nail plates which are pivotally connected to each other to provide a folding prefabricated truss structure. Such a structure has a folded, relatively compact state in which it may be transported to building sites along with other like trusses, and then unfolded to the desired final shape. Since that shape is predetermined, such trusses are of limited versatility.

### Summary of the invention

According to a first aspect of the invention there is provided a device for connecting together two structural building components, to provide a hinged connection between the components, the device comprising a first member for attachment to one of the components, a second member for attachment to the other component, connecting means for connecting the two members together so that at least one of the components can pivot relative to the other component and locking means for retaining said component at any selected one of a number of possible angles to the other component, wherein the device also includes indicating means for indicating the selected angle. Thus, where the device joins together two rafters of a frame of a roof structure at the apex of the frame, the hinged connection and locking means enable the rafters to be moved apart from an adjacent position (in which the frame has a relatively compact form) into a desired, predetermined angle, the indicating means enabling the user to ensure that the correct angle has been selected. Furthermore, because the selected angle is one of a number of possible angles, the same frame can be used for roofs of different pitches.

Preferably, the connecting means and one of the first and second members have portions which overlap each other, the locking means comprising a set of apertures in one portion and one or more apertures in the other portion and a locking member receivable in aligned apertures in the two portions to retain the components at a respective selected angle, corresponding to the relative positions of the first and second members at which said alignment occurs.

This type of locking means is relatively simple, and easy to use and preferably also acts as the indication means, the alignment of the apertures providing said indication.

The locking member in this case may, for example, comprise a pin or bolt.

Preferably, the indication means also comprises markings on the portion having the set of apertures to indicate the size of the angle selected.

For example, the markings may comprise indications of angles, in degrees, each indication being situated adjacent a respected aperture in the set and indicating the angle selected when that aperture is aligned with an aperture in the other portion.

Preferably, for each possible angle, only a respective one aperture in said set is aligned with an aperture in said other portion.

This helps to simplify the reading of the indication means to determine which angle is being selected.

It will be understood that references here to apertures being "aligned" also include any degree of overlap, partial alignment, register or other relative position between two apertures which is such as to enable a locking member to be passed through both of them to enable the first and second members to be maintained at the desired angle.

The apertures of the set of apertures in said one portion may conveniently be equiangularly spaced with respect to a hinge axis, about which one of the building components can pivot relative to the other component, and the aperture in the other portion is one of a further set of apertures in that portion, the further set also being equiangularly arranged with respect to the hinge axis, at a different angular spacing from the angular spacing between the apertures of the first mentioned set of apertures.

This enables the angular spacing between apertures of the set to be much bigger than the increments between successive possible angles. This, in turn, allows the apertures to be spaced further apart than would otherwise be possible for a given increment and thereby improves the structural support of the portions around the apertures, and allows the indication means to be easier to read because the spacing between markings may also be correspondingly larger.

For example, the angular spacing between the apertures of one set may be 45°, the spacing between the apertures of the other set being 40°.

The connecting means may be incorporated into one of the first and second members, but preferably comprises a connecting member pivotally connected to each of the first and second members, with the locking and indicating means being arranged to enable each member to be retained at an angle selected from a number of possible angles relative to the connecting member and to provide an indication of said angle.

Preferably, the first and second members comprise plates having teeth for attaching the building components to the device.

Preferably, the connecting member includes an eye for receiving a hook.

This enables a roofing structure comprising said device and two structural building components, such as rafters, connected thereto to be raised using a crane.

The inner edges of the first and second members preferably include flanges for locating the building components, the members being pivotable into a closed position in which said inner edges, and hence the components, are adjacent each other and substantially parallel to each other.

This enables a frame formed from the building components and the device to be relatively compact when in a closed condition.

Preferably, each member also has an end abutment for axially locating the respective building component.

The abutment thus prevents the building components from being mounted too close to a hinge axis for that member.

Preferably, each abutment comprises a respective lip at the end of the respective flange of each of the first and second members.

The invention also lies in a frame for a pitched roof for a building, the frame comprising a plurality of pairs of opposed rafters and devices for pivotally connecting the rafters of each pair together so as to define a hinge axis along the region of the ridge or apex of the roof.

Preferably, each device is a device in accordance with the first aspect of the invention.

### Brief description of the drawings

The invention will now be described, by way of example only, with reference to the accompanying drawings in which:-
Figure 1 is a partially exploded side view of a device according to the invention, used to connect together two rafters for a frame for a pitched roof, the frame also being in accordance with the invention;
Figure 2 is a view corresponding to Figure 1, but showing the rafters at a different angular position;
Figure 3 is an elevational view of one of the members of the device of Figures 1 and 2, used to provide an attachment for a respective rafter;
Figure 4 is a similar view of a connecting member of the device;
Figure 5 is an elevational view, from the opposite side to that shown in Figure 3 of another member of the device, this member being attached to the other rafter, in use;
Figures 6 and 7 are isometric views of the member shown in Figure 5;
Figure 8 is an isometric view of part of a hinged roofing panel assembly which includes a frame, also in accordance with the invention, and a number of the devices shown in Figures 1-7, the panel being shown in a closed position;
Figure 8a is a detailed sectional view of part of the assembly; and
Figure 9 is an isometric view of the panel when in an open position.

### Detailed description of the drawings

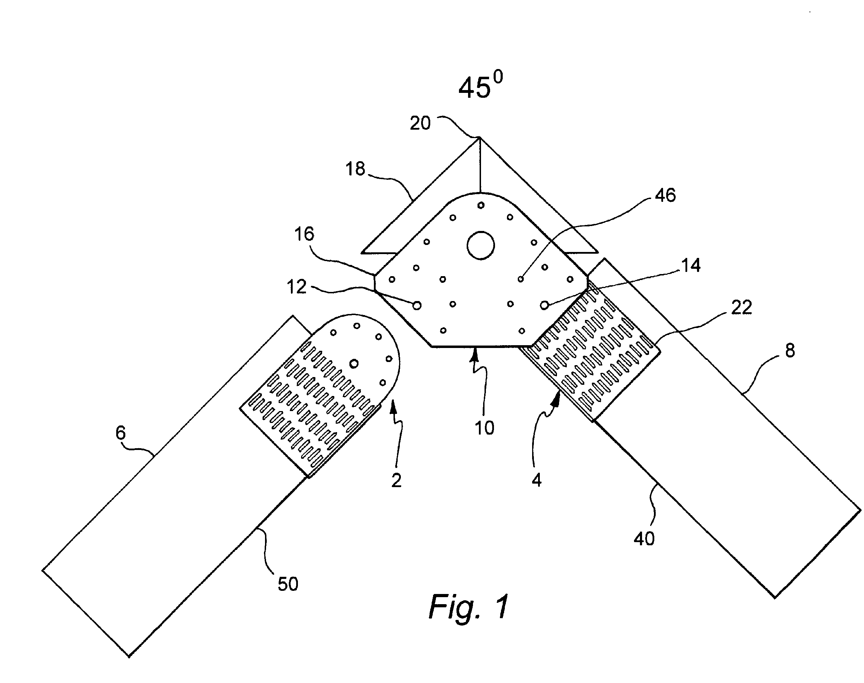

With reference to Figure 1, a device in accordance with the invention comprises first member 2 and a second members 4, each in the form of a respective plate attached to a respective one of a pair of timber rafters 6 and 8 constituting part of the frame of the roofing structure. The members 2 and 4 are connected together by a connecting member 10 which includes apertures 12 and 14 to enable headed spindles (not shown) to pass through the connecting member 10 and each of the members 2 and 4 to enable the rafters 6 and 8 to pivot about axes passing perpendicularly through the centres of the apertures 12 and 14. For the sake of clarity, the headed spindles have been omitted from the figures.

The connecting member 10 comprises the first plate 16 and a second plate 18 which is identical to the plate 16 and is positioned in a parallel, spaced apart relationship with the plate 16. Both these plates are nailed to a timber filler piece 18 which also defines the apex 20 of the roof frame portion, and hence the ridge of the finished roof. The plates of the connecting member 10 are also held together by the headed spindles which pass through the apertures 12 and 14 in the plate 16 (and the corresponding apertures in the opposed plate).

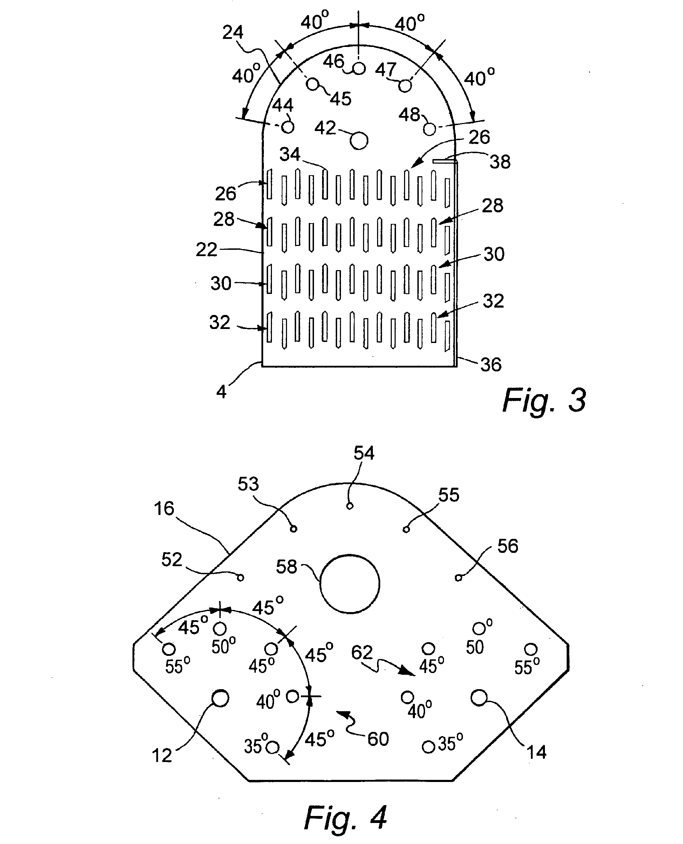

With reference to Figure 3, the plate 4 is formed from sheet metal and comprises a substantially rectangular portion 22 which leads at one end to a semicircular portion 24. Four rows of teeth 26, 28, 30 and 32, formed by a process of pressing or stamping the portion 22, project substantially perpendicularly from the portion 22 and are, in use, embedded in the rafter 8 to retain the latter on the member 4. The member 4 thus also constitutes a nail plate, as well as part of the connecting device of the invention. Each row has 14 teeth, and one of the teeth is specifically referenced 34 by way of example.

Along one side of the portion 22 there is provided a flange 36 which extends perpendicularly upwards from the plate 22 in the same general direction, and on the same side of the plate as, the teeth. At the top of the flange 36, as viewed in Figure 3, there is provided an interned lip 38. In use, the flange 36 helps to locate the lower edge 40 of the rafter 8 against the lower edge of the portion 22, whilst the lip 38 acts as a stop that axially locates the rafter 8 relative to the hinge axis that passes through the aperture 14.

The semicircular portion 24 includes an aperture 42 which, in use, is aligned with the aperture in the connecting member 10 (and the corresponding aperture in the other plate of the connecting member 10). Thus the spindle passes through the aperture 14 (and the aperture in the other plate of the connecting member 10) also passes through the aperture 42. The portion 24 also includes a set of five further apertures which are at the same radial position relative to the axis of rotation defined by the spindle, and which are equiangularly spaced at 40° intervals. Those apertures are denoted by reference numerals 44-48. In use, the semicircular portion 24 overlaps with part of the plate 16 of the connecting portion. The member 2 is identical in all respects to the member 4 other than in that it is a mirror image of the member 4 so that the side flange is on the opposite edge of the member 2 so that the flange of the member 2 (and the associated perpendicular end lip located at the lower or inner) edge 50 of the rafter 6. The member 2 will not therefore be described in detail.

In addition to the apertures 12 and 14, the plate 16 includes a series of nail holes 52-56 through which the plate can be nailed onto the filler piece 18, and an eye 58 for receiving the hook of a crane. The plate 16 also includes two sets of apertures 60 and 62. The apertures in the set 60 are equiangularly arranged around and equally radially spaced from the aperture 12, whilst the apertures of the set 62 are equiangularly arranged around and equally radially spaced from the aperture 14. As is indicated in Figure 4, the angular spacing of the apertures in the set 60 is 45°. The apertures of the set 62 are also spaced at 45° intervals. The other plate forming part of the connecting member 10 has an identical arrangement of an eye, nail holes and apertures, including apertures identical to the sets 60 and 62. The face of the rafter 6 opposite that shown in Figure 1 is attached to a second member which is identical to the member 4, whilst a member identical to member 2 is attached to the rafter 8 opposite that shown in Figure 1. The members attached to the non-visible faces of the rafters cooperate with the plate of the connecting member 10 opposite the plate 16 in the same way as the members 2 and 4 cooperate with the plate 16.

The apertures 44, 48 in the member 4 constitute a set of apertures, each aperture in the set cooperating with the respective aperture in the set 62 in the plate 16, in the following way.

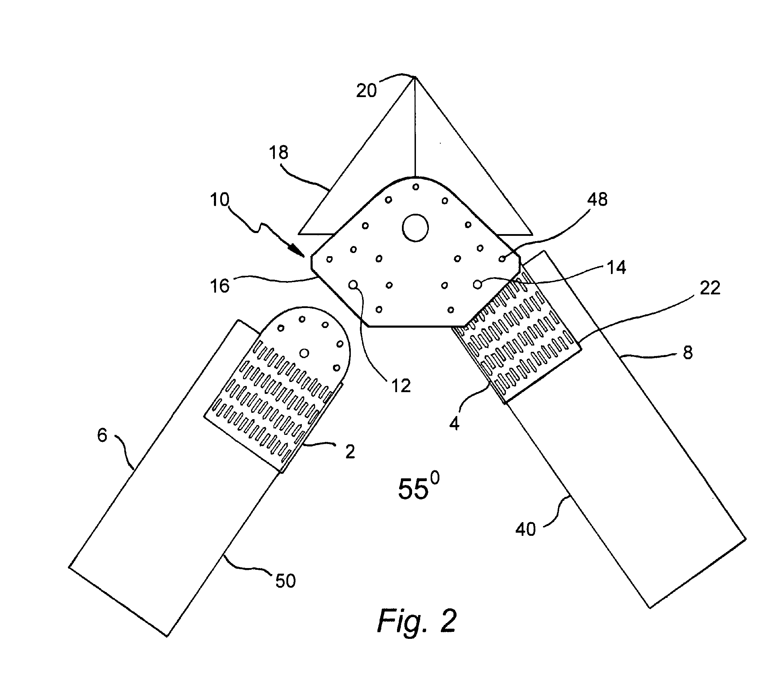

The spindle passing through the apertures 40 and 42 (from the corresponding apertures in the member opposed to the member 4 and the plate opposed to the plate 16 allows the rafter 8 to pivot about an axis defined by that spindle and the apertures. This can bring each of the apertures 44-48 into alignment, in turn, with its respective aperture in the set 62 in the set of apertures 62. When one of the apertures 44-48 is in alignment with its respective aperture, none of the other apertures 44-48 is aligned with any of the other apertures in the set 62, and the angle between the rafter 8 and the horizontal is as shown on the marking immediately adjacent the aperture of the set 62 which is aligned. Thus, with rafter 8 in the position shown in Figure 1, the aperture 46 is aligned with the aperture marked 45°, and the rafter 8 makes that angle with the horizontal. None of the other apertures in the set 62 is aligned with any of the apertures in the member 4. A similar alignment occurs between one of the apertures in the member opposed to the member 4 and a corresponding aperture in the plate opposed to the plate 16, so that the rafter 8 can be retained at that angular position by passing a locking member such as a pin or nut and bolt arrangement through the aligned apertures. Figure 2 shows the same apparatus when the rafter 8 makes an angle of 55° with the horizontal, in which configuration the aperture 48 is the only aperture of the apertures 44-48 aligned with an aperture in the set 62. The aligned aperture in that set is the one marked 55°. The rafter 6 can be locked at any one of a number of indicated angular positions relative to the horizontal in exactly the same way. In the arrangement of Figure 2, the device is attached to a filler piece 18' which has a different pitch from the filler piece 18, to correspond with the desired angle between the rafters.

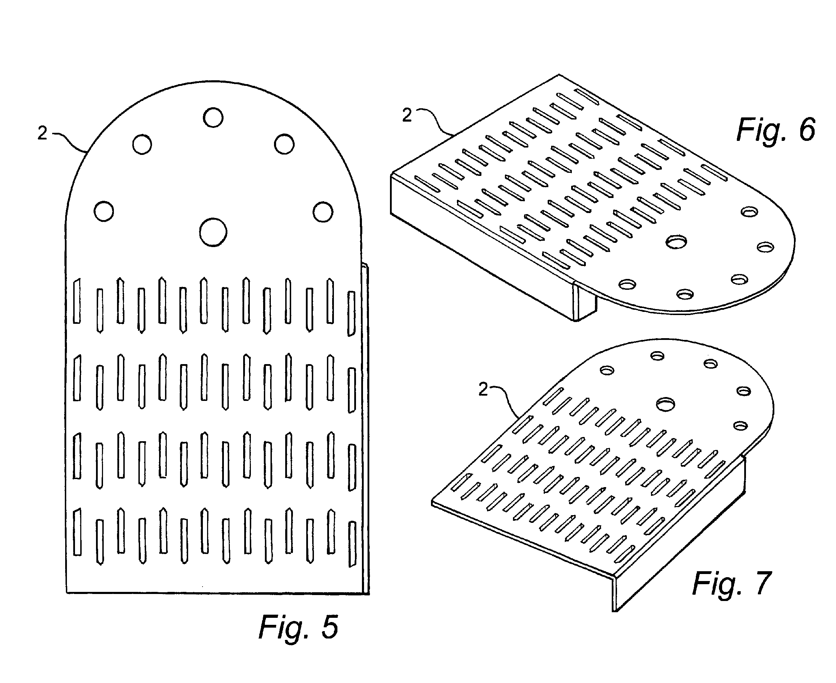

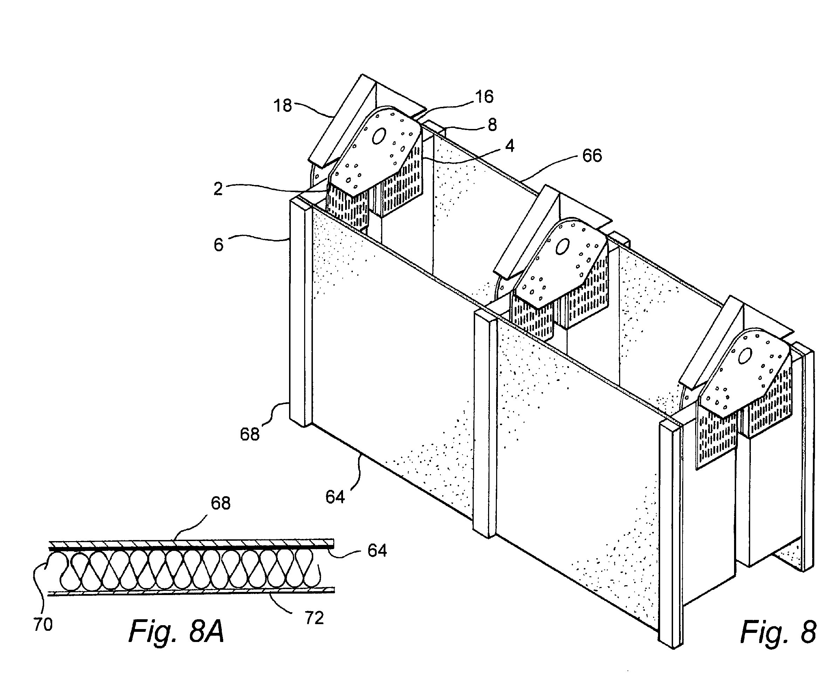

Figure 8 shows a hinged roof panel assembly comprising rafters 6 and 8 connected by the connecting device of Figures 1-7, and two identical arrangements of rafters and connecting devices. The filler pieces (such as the filler piece 18 run along what is to be the ridge of the roof, and the rafters on each side of the panel assembly are attached to a respective panel, 64 and 66 by counter battens such as counter batten 68. The panel 64 and 66 each constitute one layer of a laminated construction, a typical cross section of which is shown in Figure 8a. It can be seen from that figure that the panel 64 is constituted by a layer of sheathing, the underside of which is either attached to rafters or, in the spaces between the rafters, helps to contain a layer of insulation 70 which is held in position by means of layers of plaster boards 72, each of which extends across the space between adjacent rafters and is attached at its edges to those rafters. The panel shown in Figure 8 is supplied in the configuration shown in that figure, in which the rafters on opposite sides of the assembly are parallel to each other. It can be seen from Figure 8 that this configuration is relatively compact.

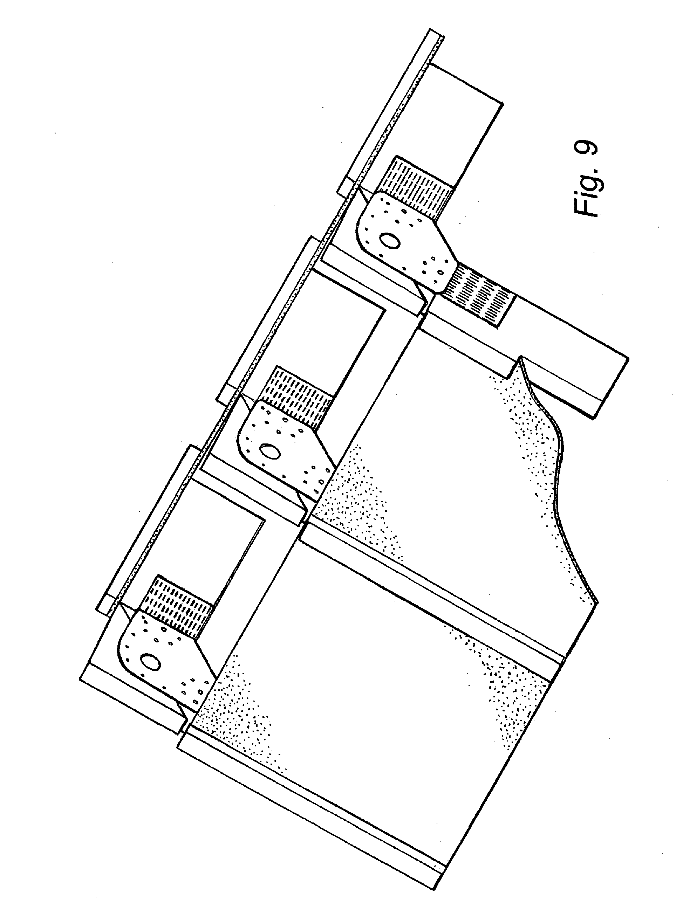

When the assembly is to be opened up to the required angle, the eyes of the connecting devices are connected to hooks of a hoist assembly attached to a crane. The crane can then lift the assembly to allow workmen to begin to separate the panels which can then be lowered, using the crane, onto a support that causes the rafters and panels that they support to splay out until the desired angle, as indicated by the alignment of apertures as discussed above is reached. The crane then stops lowering the assembly and workers can then fix the panels at the desired angle by means of locking pins or nuts and bolts passing through the aligned apertures. Figure 9 shows the panel assembly when the rafters are being splayed apart until they have reached the desired angle.

## Claims

1. A device for connecting together two structural building components, to provide a hinged connection between the components, the device comprising a first member for attachment to one of the components, a second member for attachment to the other component, connecting means for connecting the two members together so that at least one of the components can pivot relative to the other component and locking means for retaining said component at any selected one of a number of possible angles to the other component, wherein the device also includes indicating means for indicating the selected angle.

2. A device according to claim 1, in which the connecting means and one of the first and second members have portions which overlap each other, the locking means comprising a set of apertures in one portion and one or more apertures in the other portion and a locking member receivable in aligned apertures in the two portions to retain the components at a respective selected angle, corresponding to the relative positions of the first and second members at which said alignment occurs.

3. A device according to claim 2, in which the locking means also acts as part of the indicating means, the alignment of apertures providing said indication, wherein the indication means also comprises markings on the portion having the set of apertures to indicate the size of the angle selected.

4. A device according to claim 2 or claim 3, in which for each possible angle, only a respective one aperture in said set is aligned with an aperture in said other portion.

5. A device according to any of claims 2 to 4, in which the apertures of the set of apertures in said one portion are equiangularly spaced with respect to a hinge axis, about which one of the building components can pivot relative to the other component, and the aperture in the other portion is one of a further set of apertures in that portion, the further set also being equiangularly arranged with respect to the hinge axis, at a different angular spacing from the angular spacing between the apertures of the first mentioned set of apertures.

6. A device according to any of the preceding claims, in which the connecting means comprises a connecting member pivotally connected to each of the first and second members, with the locking and indicating means being arranged to enable each member to be retained at an angle selected from a number of possible angles relative to the connecting member and to provide an indication of said angle.

7. A device according to claim 6, in which the connecting member includes an eye for receiving a hook.

8. A device according to any of the preceding claims, in which the first and second members comprise plates having teeth for attaching the building components to the device.

9. A device according to any of the preceding claims, in which the first and second members have inner edges which include flanges for locating the building components, the members being pivotable into a closed position in which said inner edges, and hence the components, are adjacent each other and substantially parallel to each other.

10. A device according to claim 9, in which each of the first and second members also has an end abutment for axially locating the respective building component.

11. A device according to claim 10, in which each abutment comprises a respective lip at the end of the respective flange of each of the first and second members.

12. A frame for a pitched roof for a building, the frame comprising a plurality of pairs of opposed rafters and devices for pivotally connecting the rafters of each pair together so as to define a hinge axis along the region of the ridge or apex of the roof.

13. A frame according to claim 12, in which each device is a device in accordance with the first aspect of the invention.
